Europäisches Patentamt

European Patent Office

Office européen des brevets

(19)

(11) Publication number : **0 178 859 B2**

(12)                NEW EUROPEAN PATENT SPECIFICATION

(45) Date of publication of the new patent
specification : **30.12.92 Bulletin 92/53**

(51) Int. Cl.⁵ : **B60C 11/06**

(21) Application number : **85307286.6**

(22) Date of filing : **11.10.85**

(54) **Pneumatic radial tyre for heavy load vehicles.**

(30) Priority : **13.10.84 JP 214743/84**

(43) Date of publication of application :
**23.04.86 Bulletin 86/17**

(45) Publication of the grant of the patent :
**11.10.89 Bulletin 89/41**

(45) Mention of the opposition decision :
**30.12.92 Bulletin 92/53**

(84) Designated Contracting States :
**DE FR GB**

(56) References cited :
**DE-A- 2 931 628**
**FR-A- 2 086 748**

(56) References cited :
**FR-A- 2 119 263**
**GB-A- 1 589 141**
**US-A- 3 055 410**
**US-A- 4 446 901**
**US-A- 4 449 560**

(73) Proprietor : **SUMITOMO RUBBER INDUSTRIES**
**LIMITED**
**No. 1-1, Tsutsui-cho 1-chome**
**Chuo-ku Kobe-shi Hyogo 651 (JP)**

(72) Inventor : **Takeuchi, Akihiro**
**17-23-201, Ryugadai 8-chome Suma-ku**
**Kobe-shi Hyogo-ken (JP)**

(74) Representative : **Prutton, Roger et al**
**MARKS & CLERK Alpha Tower Suffolk Street**
**Queensway**
**Birmingham B1 1TT (GB)**

EP 0 178 859 B2

## Description

This invention relates to a pneumatic radial tyre for heavy duty vehicles such as trucks, buses and the like, more particularly to a pneumatic radial tyre provided with rib shaped tread pattern suitable for travel on paved roads at a high speed, in addition, improving its wear resistant property and effectively reducing uneven wear of tread without sacrificing wet grip performance.

In general, a pneumatic radial tyre provided with reinforcing belt layers composed of steel cords, is superior to the conventional bias tyre in respect of wear resistance, puncture resistance and saving fuel expense, because of the high ridigity of the belt layers between the tread rubber and the carcass ply. However, its riding comfort is rather worse than the bias tyre in view of its high rigidity. Therefore the development of such a radial tyre having property as described above tends to advance along with improvement of road. In recent years in our country, in company with arrangement and extension of the highway networks, the demand for pneumatic radial tyres has been increasing remarkably. In general, as tread patterns of pneumatic radial tyres, rib types, lug types, rib-lug types, block types and rib-block types etc. are employed according to its usage respectively, particularly from the view point of traction properties, low heat build up properties and wet grip performance. A tyre for heavy duty trucks and buses preferably employs rib type tread patterns and block type tread patterns.

However, the block type pattern applied to a pneumatic radial tyre for heavy vehicles has the disadvantage that such block pattern has comparatively smaller area which makes contact with the road while the tyre is in rotation. Said block pattern has a tendency to wear fast, owing to excessive relative movement of the blocks during rotation of the tyre. Furthermore, there is a tendency to uneven wear in the front and the rear of the block, which considerably reduces the tyre life. Furthermore, in order to be well-furnished with such properties as low heat generation and high wear resistance together with high traction and braking performance sufficient for the use on the highway at high speed, generally, the so-called rib type tread pattern types being provided with a plurality of continuous zigzag circumferential ribs defined along the widthwise direction of tyre by zigzag grooves extending circumferentially of said tread are preferably employed, and although such ribs are generally continuous in the circumferential direction. There are some modifications of the rib type tread patterns; for example, setting some narrower circumferential grooves on said ribs, otherwise, setting comparatively shallower lateral grooves extending in the width direction of the tyre thereon, and blocks and ribs are provided together with thereon, so-called rib-block type tread pattern are used too. In any case, peculiar abnormal wears occur in the rib edge regions or in the shoulder regions when continuously running over a long distance at a high running speed.

The radial tyre has a peculiarity of construction provided at its crown portion with circumferential belt layer having a high rigidity. Accordingly, said tyre has excellent wear resistance. However due to the difference of rigidity among themselves of each portion, uneven wear is likely. As long as wear life of tyres is long, this phenomenon is aggravated to make the worn appearance of the tyres considerably worse.

There are various kinds of abnormal wear associated with tyres for the heavy duty vehicle which are classified in the three kinds that is:

(1) Wear which causes generation of steps extending transversely in the cross-sectional direction of the tyre, particularly causes the tread rubber facing both the shoulder portions to wear more readily than the tread rubber facing the centre portion, which is called uneven shoulder wear.

(2) Wear which causes indentations or steps to be produced across the boundary of a substantially transverse groove which defines a tread pattern is called heel and toe wear.

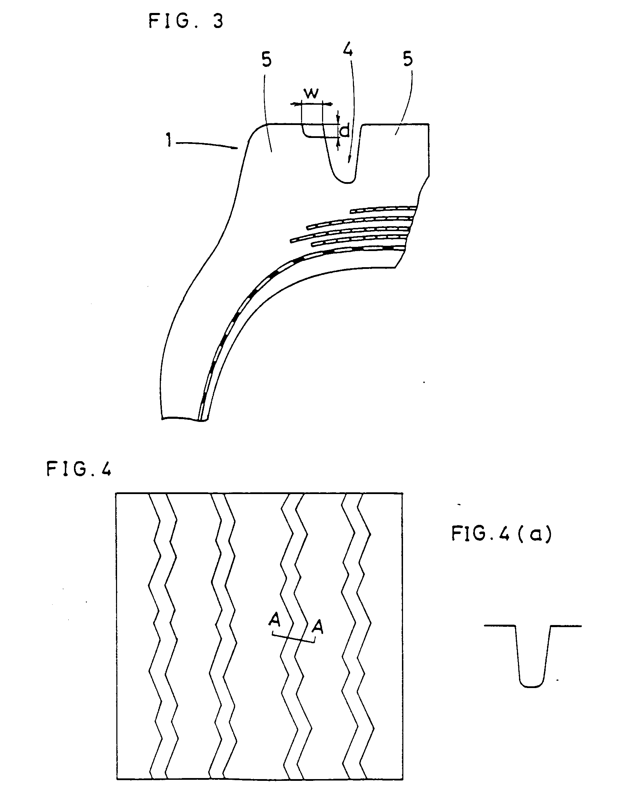

(3) Wear which abnormally occurs at that portion of circumferential ribs defined by a circumferential groove which is adjacent to the circumferential groove, which is called railway wear. It is an object of the invention to prevent especially occurrence of railway wear of the tyre in all kinds of those uneven wear. Therefore, the invention will be described in detail about railway wear, which starts from a side edge portion L of a circumferential rib 5 defined by tread grooves 4 of a tyre 1 and gradually spreads in the circumferential direction over a region with a stepwise difference d and a width W as shown in Figure 3 when the tyre continuously runs straight over a long distance at a high speed.

Such abnormal uneven wear not only makes the appearance of the tyre 1 awkward, but also adversely affects tyre performance, especially traction performance, braking performance, and cornering performance, which largely reduce the tyre life.

Heretofore, as a countermeasure for above mentioned abnormal wear, some disclosures, for example, Japanese patent publication No. 51-15282 and No. 46 4553 etc. have been proposed, but hitherto none has led to fully satisfactory results which can effectively avoid all kinds of uneven wear of the tyre.

For example, as described in Japanese patent publication No. 51-15282, the cross sectional width of circumferential groove adjacent to the central rib is set up to increase radially, accordingly, the width of central rib radially decreases, and to prevent the stone pick-up, setting a jut portion separated from said rib portions and forming the cross sectional shape of groove like upside-down shaped V to eliminate the railway wear, which occurs at a side edge portion of a circumferential rib, which has problems on production owing to complicated groove shape. Moreover, the notches of both sides of the groove tend to pick up stones, so as to damage the both edges of rib portions. Therefore, hitherto none has led to fully satisfactory results which can effectively avoid all kinds of uneven wear of the tyre. A tyre according to the preamble of claim 1 is known, for example, from GB-A-1 589 141.

It is an object of the invention to provide pneumatic radial tyres advantageously adaptable for heavy duty vehicles, which can effectively prevent said railway wear which have not ever been solved by any prior arts, and can prolong the tyre life, while keeping the features of rib type pattern.

This object is achieved by the features of the claim.

In the accompanying drawings:-

Figure 1 is a plane view of an embodiment of the tread pattern in a tyre according to the invention;

Figure 2 is a schematically cross-sectional view of tread construction taken along line A-A of Figure 1;

Figure 3 is a partially radical section wear of a tyre illustrating the occurrence of railway wear;

Figure 4 is a plane view showing a part of a five rib tread pattern of the prior art tyre;

Figure 4(a) shows the sectional groove shape taken along line A-A in Figure 4;

Figure 5(a), (b), (c), and (d) are schematically cross sectional views of tread grooves taken along lines E-E, K-K, L-L, M-M of Figure 1 respectively; and

Figure 6 is a plane view of another embodiment of the invention.

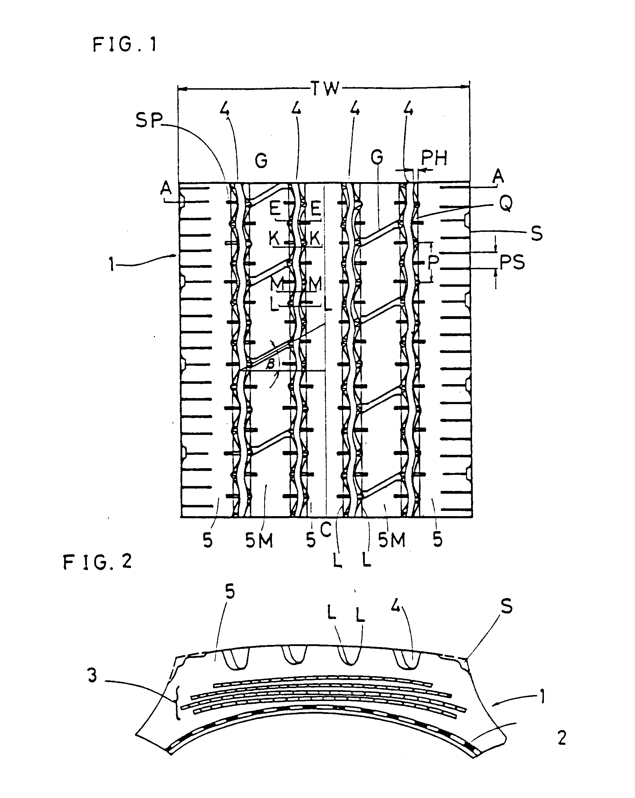

The invention will now be described in detail with reference to accompanying drawings showing an example according to the present invention. As shown in Figure 1 and Figure 2, a heavy duty pneumatic radial tyre comprises a carcass 2 of a substantially radial construction composed of at least one rubberized ply layer containing cords embedded therein and a belt 3 superimposed about said carcass for stiff reinforcement beneath a tread 1 and said tread 1 is provided with five rows of rib 5 defined along the widthwise direction of tyre by wide grooves 4 extending circumferentially of said tread.

The side edge portion L of said wide ribs defined the tread surface by circumferential groove 4 is substantially parallel with the equatorial line C of a tyre when a tyre is still new. However as tread wears out, said straight line L becomes a zigzag line with a constant pitch (P), of which point height (PH) is designed to be a range of 0-2%, more preferably 0-1.5% of the tread width (TW) when the tyre is new, and to become large as tread wear progresses, to a range of 1-4%, more preferably 2-4% of the tread width at maximum value.

When the point height of the new tyre, of which groove depth is deepest and the tread stiffness on contact area with ground is extremely low, is set up to be larger than 2% of the tread width, the stiffness of the pointed end of the zigzag shaped rib facing to the groove become lower than that of the other part, thus abnormal wear starts from a said pointed end portion of a circumferential zigzag rib and gradually spreads in the circumferential direction over a region with a stepwise deference d and a width W, accordingly, the said point-height (PH) of a new tyre having a good contact performance with ground is preferred to be small.

However, the traction performance decreases at the same time as tread wear progresses and the stiffness of the tread surface contacting with the ground increases. So, in order to compensate the reduction of said traction performance, the circumferential grooves are arranged to have increasing point height as tread wear occurs and a maximum value of said point height is set up to be a range of 1-4% of the tread width (TW). When it is larger than 4%, in spite of increasing the tread contactive performance, owing to service condition, there is a possibility of an occurrence of railway wear. However when it is less than 1%, due to decreasing the tread contactive performance, the traction performance and many other kind of tyre performance are apt to be decreased. Furthermore, in order to increase the performance of the worn tyres, especially the wet grip performance, slits (SP) are disposed on the pointed ends of zigzag grooves as shown in Figure 1.

Lateral grooves G with the inclination angle $\beta$ with respect to the axial direction of tyres are disposed on the pointed ends of zigzag grooves every two pitch, and the depth of said lateral groove is set up to be less than 20% depth of main groove 4. If it is more than 20%, the continuity of ribs extending to the circumferential direction is missed. As a countermeasure to prevent a so-called shoulder wear, slits (S) are disposed on both tread edges every pitch (PS). This slit (S) is effective as a countermeasure for preventing not only said shoulder wear but also wandering phenomenon, because of making it easy to ride across the railway line and the like by the way of setting slits deeply on buttress side as shown in Figure 2.

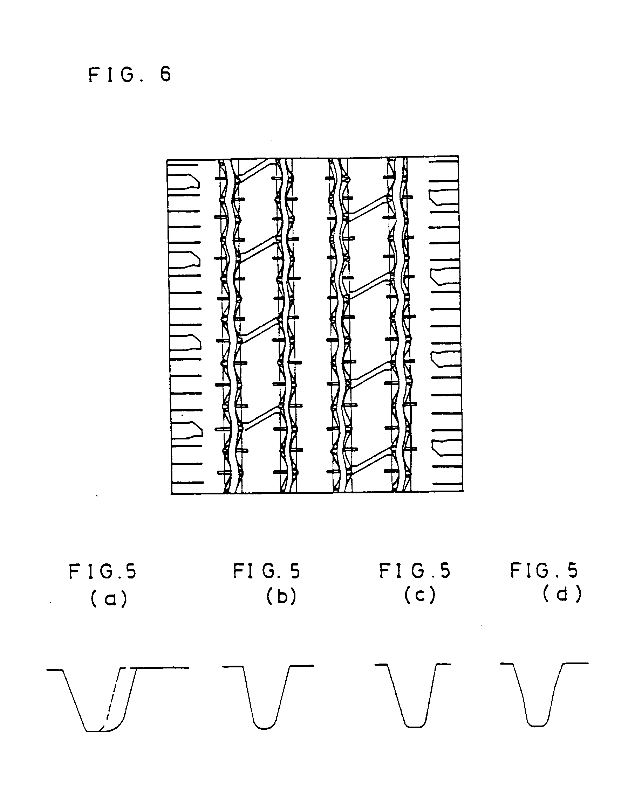

In order to make clear the effectiveness of the present invention, the comparative test result of one embodiment according to the invention and a prior art tyre will be hereafter explained. One embodiment is a heavy duty pneumatic tyre having a size of 10.00 R 20, comprising a carcass of a substantially radial construction composed of at least one rubberized ply layer containing cords embedded therein and a belt superimposed about said carcass for stiff reinforcement beneath a tread and composed of at least three rubberized ply layers each containing metal cords embedded therein, said metal cords of which being crossed with each other at a relatively small angle with respect to the circumferential direction of tyre, and said tread being provided with five continuous circumferential ribs each having substantially same width defined along the widthwise direction of tyre by at least four main circumferential grooves (4), as shown in Fig. 1 which is a so-called "five rib pattern", a plurality of lateral shallow grooves (G) are provided on the intermediate ribs (5M) every two pitch of zigzag pattern, said lateral shallow grooves have an inclination angle (β) of 45° with respect to the axial direction of tyre, and a plurality of slits (SP) are disposed on the pointed end portion (Q) of zigzag rib by knife blades with 0.8 mm thickness, the angle of said slits is made parallel to the axial direction of tyres. Each of cross sectional shape of said slits (SP) and circumferential grooves are shown in Figure 5(a), (b), (c), (d) by taking along lines E-E, K-K, L-L, M-M, of Figure 1 respectively, the point height (PH) of zigzag grooves of new tyre is substantially 0 and its maximum value is 4 mm which is 2.1% of 194 mm of tread width TW.

On the other hand, a control tyre for comparative test is a five ribs type pattern as shown in Figure 4, of which the point height (PH) of the new tyre is 10 mm, is 5% of 195 mm of tread width TW and constant even if the tread is worn down, and this control tyre has the same construction as in the said embodiment according to the present invention except the tread pattern.

After each of these test tyres was run on 100% paved road under internal pressure of 7.25 kg/cm$^2$ and 2700 kg load per tyre over a distnace of 40,000 km, depth of railway wear (stepwise difference d) was measured to obtain results as shown in Table 1. In this table, numerical values are expressed by an index on the basis that the control tyre is 100.

As apparent from the results of Table 1, the tyre according to the invention can effectively and advantageously prevent the railway wear as compared with the control tyres. Furthermore, the wet grip performance in the tyre according to the invention shows the same test results as the prior art tyre.

## TABLE 1

|  | Present invention | prior art |
|---|---|---|
| Railway wear (d) | 46 | 100 |
| Wet grip performance (new tyre) | 100 | 100 |
| Wet grip performance (after 40,000 km run) | 100 | 100 |

## Claims

1. A pneumatic radial tyre for heavy duty vehicles constructed to effectively suppress railway wear, having a tyre tread (1) provided with at least one circumferential zig zag groove (4) to divide the tread (1) in widthwise direction of the tyre and a carcass (2) comprising at least one carcass ply of substantially radially extending rubber coated steel cords and a belt layer (3) for reinforcing a crown portion of said carcase ply, characterised in that said at least one groove (4) is shaped so that the zig zag angle thereof with respect to an equatorial line (C) of the tyre increases in angle as the tread wears out, and in that the point height (PH) of the zig zag of the main circumferential grooves (4) is in the range of 0 to 1.5 % width of the tread width (TW) of a new tyre and whilst it grows in width as the tread wears out, its maximum width being in the range of 1% to 4% of the tread width (TW).

## Patentansprüche

1. Pneumatischer Radialreifen für Schwerfahrzeuge, der zum wirsamen Unterdrücken von Gleisabnutzung gestaltet ist, mit einem Reifenprofil (1), das mit mindestens einer Umfangszickzackrille (4) zum Unterteilen des Profiles (1) in die Richtung der Breite des Reifens versehen ist, und einer Karkasse (2), die mindestens eine Karkassenschicht aus sich im wesentlichen radial erstreckenden gummiüberzogenen Stahlcord und eine Gürtelschicht (3) zum Verstärken eines Kronenabschnittes der Karkassenschicht aufweist, dadurch gekennzeichnet, daß die mindestens eine Rille (4) so geformt ist, daß sich ihr Zickzackwinkel in Bezug auf eine Äquatorlinie (C) des Reifens im Winkel vergrößert, wenn das Profil abgenutzt wird, und daß die Spitzenhöhe (PH) des Zickzacks der Hauptumfangsrille (4) in dem Bereich von 0 bis 1,5 % der Breite der Profilbreite (TW) eines neuen Reifens liegt, während sie in der Breite wächst, wenn das Profil abgenutzt wird, wobei ihre Maximalbreite in dem Bereich von 1 % bis 4 % der Profilbreite (TW) liegt.

**Revendications**

1. Pneumatique radial pour véhicules poids lourds réalisé pour supprimer efficacement l'usure de rail, comportant une bande de roulement (1) pourvue d'au moins une rainure circonférentielle en zigzag (4) pour diviser la bande de roulement (1) dans la direction de la largeur du pneumatique et une carcasse (2) comprenant au moins une nappe de carcasse de câbles d'acier caoutchoutés s'étendant sensiblement radialement et une couche de ceinture (3) pour renforcer une portion de couronne de ladite nappe de carcasse, caractérisé en ce que ladite au moins une rainure (4) est conformée de façon que son angle de zigzag par rapport à une ligne équatoriale (C) du pneumatique ait une valeur croissante à mesure que la bande de roulement s'use, et en ce que la hauteur de crête (PH) du zigzag des rainures circonférentielles principales (4) est comprise entre 0 et 1,5% de la largeur (TW) de la bande de roulement d'un pneumatique neuf, et augmente de largeur à mesure que s'use la bande de roulement, sa largeur maximale étant comprise entre 1% et 4% de la largeur (TW) de la bande de roulement.

FIG.1

FIG.2

FIG. 3

FIG.4

FIG.4(a)

F I G . 6

| F I G . 5 (a) | F I G . 5 (b) | F I G . 5 (c) | F I G . 5 (d) |